# EUROPEAN PATENT APPLICATION

(11) **EP 4 063 113 A1**
(43) Date of publication of application: **28.09.2022**
(21) Application number: 20891032.3
(22) Date of filing: 18.11.2020
(51) Int. Cl.: B32B 5/02, B32B 5/24, B32B 27/32, B32B 27/36, B62D 29/04

(54) **MOLDING BASE MATERIAL**

(30) Priority: 19.11.2019 JP 2019208366
(71) Applicant: JAPAN VILENE COMPANY, LTD., Tokyo 104-8423 (JP)
(72) Inventor: KOBAYASHI Masaki, Moriyama-shi, Shiga 524-0041 (JP)
(74) Representative: Gille Hrabal Partnerschaftsgesellschaft mbB Patentanwälte
(86) International application number: PCT/JP2020/042916
(87) International publication number: WO 2021/100739

(57) **Abstract**

The present invention relates to a molding base material (10) with which it is possible to prepare a vehicle exterior material such as an underbody shielding material. As a result of continued investigations, the applicant of the present application found that the objective of the present invention could be achieved by means of a "molding base material including a fiber base material layer (1) and a cover layer (3), wherein the fiber base material layer and the cover layer are integrally bonded to one another by means of a polypropylene-based resin layer (5) present at the interface between the fiber base material layer and the cover layer", and wherein the fiber base material layer contains sheath-core type composite fibers of which the core portion is a polyester-based resin and the sheath portion is a polypropylene-based resin. That is, it was found, for example, that a vehicle exterior material prepared using a molding base material satisfying this composition does not readily suffer from inter-layer peeling under high-temperature conditions, and has excellent heat resistance.

## Description

### TECHNICAL FIELD

The present invention relates to a base material for molding capable of preparing an exterior material for a vehicle such as an underbody shield material.

### BACKGROUND ART

For the purpose of reducing the unevenness of the lower surface of the vehicle to suppress the air resistance during running, protecting the vehicle from flying stones from the tire, reducing road noise or the like, an underbody shield material which is a kind of exterior materials of the vehicle at the lower portion (hereinafter, the underbody shield material may be abbreviated as UBS) is provided.

As a base material for molding that can be used to prepare exterior materials of the vehicle such as UBS, the applicant of the present application has studied a base material for molding provided with a fiber substrate layer and a cover layer adhesively integrated by a polypropylene-based resin layer which exists at the interface between the fiber substrate layer and the cover layer, as described in Japanese Patent Publication No. 2020-55281 (Patent Document 1). Note that, in Patent Document 1, as an example, a base material for molding is disclosed in which a short fiber nonwoven-fabric, having core-sheath type conjugate fibers composed of polyethylene terephthalate having a melting point of 255°C in a core-portion and low melting point polyethylene terephthalate having a melting point of 180°C in a sheath-portion, is adopted as a fiber substrate layer. In addition, in the example, it is disclosed that a base material for molding is prepared by adhesively integrating a cover layer on both main surfaces of the fiber substrate layer by the polypropylene-base resin layer.

### CITATION LIST

### PATENT LITERATURE

[PATENT LITERATURE 1] JP 2020-55281 A

### SUMMARY OF INVENTION

### TECHNICAL PROBLEM

However, as a result of continuing studies by the applicant of the present application, it has been found that when an exterior material for a vehicle is prepared using a base material for molding according to the prior art described in Patent Document 1, the prepared exterior material for a vehicle tends to generate delamination under conditions such as mid-summer day on which the vehicle body is under high temperature conditions (for example, in an atmosphere of 80°C). Then, when confirming the exterior material for a vehicle on which delamination occurred, it has been found that a cover layer containing a polypropylene-based resin is peeled off from a fiber substrate layer having the core-sheath type conjugate fibers, and delamination tends to occur easily.

In particular, it has been found that said delamination tends to occur more easily because the base material for molding prepared in the example of Patent Document 1 has the cover layer on both main surfaces of the fiber substrate layer.

When mounting such an exterior material for a vehicle, which is inferior in heat resistance, on a vehicle body, delamination occurs in the exterior material for a vehicle when the vehicle body becomes high temperature, and as a result, there was a risk that various functions such as the effects of reducing the unevenness of the lower surface of the vehicle body to suppress the air resistance during running, protecting the vehicle body from flying stones from the tire, reducing road noise, or the like, would deteriorate.

Therefore, a base material for molding capable of preparing an exterior material for a vehicle having excellent heat resistance has been demanded.

### SOLUTION TO PROBLEM

The present invention is
"[Claim 1] Abase material for molding, comprising a fiber substrate layer and a cover layer, wherein the fiber substrate layer and the cover layer are adhesively integrated by a polypropylene-based resin layer which exists at an interface between the fiber substrate layer and the cover layer, and wherein the fiber substrate layer comprises core-sheath type conjugate fibers in which a core-portion is made of a polyester-based resin and a sheath-portion is made of a polypropylene-based resin".

### ADVANTAGEOUS EFFECTS OF INVENTION

As a result of continuing studies by the applicant of the present application, it has been found that the problem can be achieved by "a base material for molding, comprising a fiber substrate layer and a cover layer, wherein the fiber substrate layer and the cover layer are adhesively integrated by a polypropylene-based resin layer which exists at an interface between the fiber substrate layer and the cover layer" and the fact that the fiber substrate layer comprises core-sheath type conjugate fibers in which a core-portion is made of a polyester-based resin and a sheath-portion is made of a polypropylene-group resin.

That is, it has been found that the exterior material for a vehicle prepared by using a base material for molding satisfying the above constitution has excellent heat resistance such said delamination hardly occurs under high temperature conditions.

The reason for this is not completely clarified, but it is considered that the following effects are exhibited.

In order to provide an exterior material for a vehicle having excellent heat resistance, it is necessary that the base material for molding is made of a material having excellent shape stability even under high temperature conditions. In the base material for molding according to the present invention, the fiber substrate layer constituting the base material for molding has core-sheath type conjugate fibers containing a polyester-based resin with high heat resistance in a core-portion. Therefore, even under high temperature conditions, the core-sheath type conjugate fibers keep the fiber shape, and since the core-sheath type conjugate fibers play a role as the skeleton of the fiber base layer, the fiber substrate layer is not easily deformed. As a result, the exterior material for a vehicle prepared by using the base material for molding is excellent in shape stability even under high temperature conditions, and delamination hardly occurs.

Further, since the fiber substrate layer has core-sheath type conjugate fibers containing a polypropylene-based resin in its sheath-portion, even under high temperature conditions (for example, in an atmosphere of 80°C), adhesion integration of the constituent fibers of the fiber substrate layer with each other by the sheath component of the core-sheath type conjugate fiber and/or adhesion integration of the fiber substrate layer with the polypropylene-based resin layer is maintained. In addition, compared with, as the prior art, the base material for molding which is formed by contacting and integrating different kinds of resins such as low melting point polyethylene terephthalate and polypropylene, in the base material for molding of the present invention, the sheath-portion of the core-sheath type conjugate fibers in the fiber substrate layer and the polypropylene-based resin layer are made of a polyolefin-based resin having the same resin type. Therefore, the fiber substrate layer and the polypropylene-based resin layer can be strongly adhesively-integrated, and the exterior material for a vehicle prepared using the base material for molding has excellent in heat resistance, such as excellent in shape stability and hardly generating delamination even under high temperature condition. It also exhibits a secondary effect of excellent shape stability due to its rich rigidity, such as excellent maximum point load with bending even under high temperature conditions.

As described above, the base material for molding according to the present invention can provide an exterior material for a vehicle having excellent heat resistance, such as hardly causing delamination even under high temperature conditions.

In addition, satisfying the constitution of the present invention, an exterior material for a vehicle, prepared by using a base material for molding which is prepared by bonding and integrating a cover layer on both main surfaces of the fiber substrate layer, also has excellent heat resistance, such as excellent in shape stability and hardly causing delamination even under high temperature conditions. It also exhibits a secondary effect of excellent shape stability due to its rich rigidity, such as excellent maximum point load with bending even under high temperature conditions.

### BRIEF DESCRIPTION OF THE DRAWINGS

[FIG. 1] This is a schematic cross-sectional view of a base material for molding according to the present invention.
[FIG. 2] This is a schematic cross-sectional view of a base material for molding prepared in the examples.

### DESCRIPTION OF EMBODIMENTS

In the present invention, various configurations such as, for example, the following configurations can be appropriately selected. Incidentally, unless otherwise described and specified, various measurements described in the present invention, were carried out under 25°C temperature conditions under normal pressure. Then, unless otherwise stated, various measurement results explained in the present invention were obtained by measuring a value that is one order of smaller than the desired value, and the obtained value was rounded to the nearest number to the obtained value. As a specific example, in the case where the first decimal place is the desired value, the second decimal place is obtained by measurement then the first decimal place is calculated by rounding off the obtained value of the second decimal place, and this value is used as the value to be obtained.

Further, each upper limit value and each lower limit value exemplified in the present invention can be arbitrarily combined.

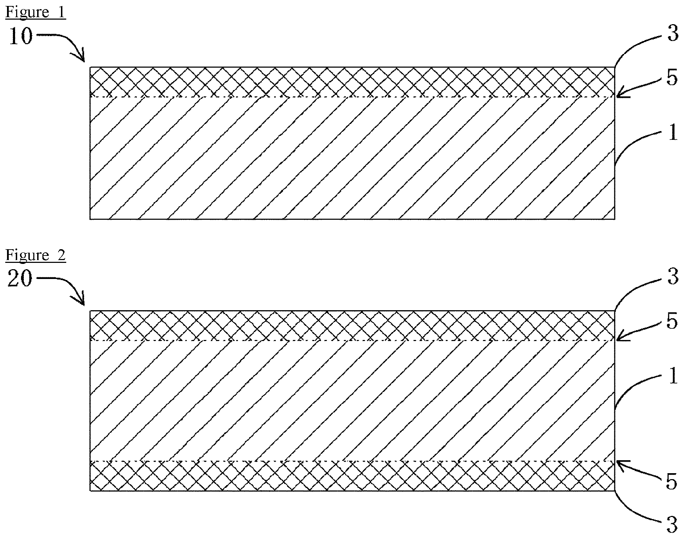

The base material for molding according to the present invention will be mainly described with reference to FIG. 1 which is a schematic cross-sectional view thereof. Incidentally in FIG.1, a base material for molding (10) consisting of the fiber substrate layer (1), the cover layer (3) and a polypropylene-based resin layer (5) which exists at the interface between the both layers (1, 3) and adhesively integrates with each main surface is exemplified. Note that the polypropylene-based resin layer (5) is illustrated as a dashed line.

The type of the fiber substrate layer (1) referred to in the present invention may be appropriately selected, and may be, for example, a fabric such as a nonwoven-fabric, a fibrous-web, a woven-fabric or a knitted-fabric. Further, the type of the cover layer (3) may be appropriately selected, and may be, for example, a material such as a fabric, such as a nonwoven-fabric, a fibrous-web, a woven-fabric or a knitted-fabric, an air permeable film or a foamed sheet. In particular, the cover layer (3) preferably contains a fabric, and the cover layer (3) is more preferably a fabric so as to provide a base material for molding (10) which is excellent in moldability such as being flexible and being rich in followability to a mold. In particular, a base material for molding (10), wherein the fiber substrate layer (1) and the cover layer (3) are a fabric (particularly, a nonwoven-fabric or a fibrous-web) formed by randomly entangling all constituent fibers, is more flexible and richer in followability to a mold, so that it is excellent in moldability and is more preferable.

In the present invention, the fiber substrate layer (1) has core-sheath type conjugate fibers characterized by the core-portion which is a polyester-based resin and the sheath-portion which is a polypropylene-based resin. Note that the constituent fibers of the fiber substrate layer (1) may be integrated to each other by the sheath-portion (polypropylene-based resin) of the core-sheath type conjugate fibers. By a fiber substrate layer (1) of the configuration, it is preferable to provide an exterior material for a vehicle with high rigidity such as excellent maximum point load with bending.

The type of the polyester-based resin may be a well-known one, for example, polyethylene terephthalate, polytrimethylene terephthalate, polybutylene terephthalate, polyethylene naphthalate, polybutylene naphthalate, polycarbonate, polyarylate, wholly aromatic polyester resins, or the like may be employed. The melting point of the polyester-based resin is higher than 80°C, preferably 90°C or higher, and preferably higher than 100°C. Note that the melting point of the polyester-based resin, constituting the core-portion of the core-sheath type conjugate fiber in the present invention, is higher than that of the polypropylene-based resin constituting the sheath-portion. In addition, it is preferable that the melting point of the polyester-based resin is higher than the melting point of the polypropylene-based resin constituting the polypropylene-based resin layer (5).

In addition, the type of polypropylene-based resin may be a well-known one, for example, polypropylene, polymethylpentene, polypropylene having a structure in which a part of a hydrocarbon is replaced with a cyano group or a halogen such as fluorine or chlorine, or the like can be employed. In particular, when a polypropylene-based resin contained in a sheath-portion of core-sheath type conjugate fibers and a polypropylene-based resin contained in a polypropylene-based resin layer (5) are the same resin (e.g., both of which are polypropylene), the fiber substrate layer (1) and the polypropylene-based resin layer (5) can be strongly adhesively integrated, then it is possible to provide an exterior material for a vehicle having excellent heat resistance, such as excellent in shape stability, delamination hardly occurs between the fiber substrate layer (1) and the polypropylene-based resin layer (5), and excellent in rigidity such as excellent maximum point load with bending, even under high temperature conditions, and it is preferable. The melting point of the polypropylene-based resin is higher than 80°C, preferably 90°C or higher and preferably higher than 100°C.

The area ratio of the core-portion and the sheath-portion in the fiber cross section of the core-sheath type conjugate fiber can be appropriately adjusted, but can be 1:9 to 9:1, 2:8 to 8:2, 3:7 to 7:3, and 4:6 to 6:4.

Note that the core-sheath type conjugate fiber may be a fiber prepared by kneading a pigment, or a dyed fiber.

Various values such as fiber length and fineness of the core-sheath type conjugate fiber are appropriately adjusted so as to provide an exterior material for a vehicle having excellent heat resistance.

In order to provide a base material for molding (10) capable of preparing an exterior material for a vehicle having excellent heat resistance, the fineness of the core-sheath type conjugate fiber can be 1 to 100 dtex, can be 1.5 to 50 dtex, can be 2 to 30 dtex, and can be 3 to 10 dtex.

In addition, the fiber length of the core-sheath type conjugate fiber is not particularly limited, but the fiber length of the core-sheath type conjugate fiber can be 20 to 150 mm, 25 to 100 mm, 30 to 90 mm, and 40 to 80 mm so as to provide a base material for molding (10) which has excellent in rigidity, such as excellent maximum point load with bending, and excellent texture. It is to be noted that it may be a fiber having a continuous length which s longer than 150 mm and where it is difficult to specify the fiber length (a concept including a constituent fiber of a melt blown nonwoven-fabric and/or a constituent fiber of a spunbond nonwoven-fabric, or the like). "Fiber length" refers to a value measured according to JIS L1015 (2010), 8.4. 1c-direct method (C method).

Although the ratio of the core-sheath type conjugate fibers included in the fiber substrate layer (1) is appropriately adjusted, the higher the ratio of the mass of the core-sheath type conjugate fibers to the mass of the fibers constituting the fiber substrate layer (1), the more excellent the exterior material for a vehicle having heat resistance tends to be provided. Therefore, the ratio is preferably 5% by mass or more, preferably 10% by mass or more, preferably 20% by mass or more, preferably 30% by mass or more, preferably 40% by mass or more and preferably 50% by mass or more.

In addition, the fiber substrate layer (1) may contain other fibers composed of one kind of organic resin or fibers composed of a plurality of kinds of organic resins, besides the core-sheath type conjugate fibers characterized by the core-portion which is a polyester-based resin and the sheath-portion which is a polypropylene-based resin. In addition, when the cover layer (3) is provided with fibers, the cover layer (3) may contain, as constituent fibers, fibers composed of one kind of organic resin or fibers composed of a plurality of kinds of organic resins.

As such a fiber, for example, polyolefin-based resins (e.g., polyethylene, polypropylene, polymethylpentene, a polyolefin-based resin having a structure in which a part of a hydrocarbon is replaced with a cyano group or a halogen such as fluorine or chlorine), styrene-based resins, polyvinyl alcohol-based resins, polyether-based resins (e.g., polyether ether ketone, polyacetal, a modified polyphenylene ether, aromatic polyether ketone, or the like), polyester-based resins (e.g., polyethylene terephthalate, polytrimethylene terephthalate, polybutylene terephthalate, polyethylene naphthalate, polybutylene naphthalate, polycarbonate, polyarylate, wholly aromatic polyester resins, or the like), polyimide-based resins, polyamide-imide resins, polyamide-based resins (e.g., aromatic polyamide resin, aromatic polyether amide resin, nylon resin, or the like), resins having a nitrile group (e.g., polyacrylonitrile, or the like), urethane-based resins, epoxy-based resins, polysulfone-based resins (e.g., polysulfone, polyether sulfone, or the like), fluorine-based resins (e.g., polytetrafluoroethylene, polyvinylidene fluoride, or the like), cellulose-based resins, polybenzimidazole resins, acrylic-based resins (e.g., polyacrylonitrile-based resin obtained by copolymerizing acrylic esters or methacrylic esters, etc., modaacrylic resin obtained by copolymerizing acrylonitrile with vinyl chloride or vinylidene chloride, or the like), or the like can be constituted using known organic resins.

Note that these organic resins may be made of any of a linear polymer or a branched polymer, and the organic resin may be a block copolymer or a random copolymer, and there is no particular limitation on the presence or absence of the steric structure or crystallinity of the organic resin. Further, it may be a mixture of multicomponent organic resins.

Further, these organic resins may contain additives such as, for example, a flame retardant, a perfume, a pigment, an antibacterial agent, an antifungal material, a photocatalyst particulate, an emulsifier, a dispersant, a surfactant, particles to be subjected to heating and foamed, inorganic particles, and an antioxidant.

When the cover layer (3) is a fabric (more preferably, a fibrous-web or a nonwoven-fabric), the cover layer (3) is preferably provided with fibers of a polyester-based resin which is rich in heat resistance, and more preferably, the constituent fibers are only fibers of a polyester-based resin. Since the cover layer (3) contains fibers of a polyester-based resin, the fibers maintain the fiber shape and play a role as a skeleton, then the cover layer (3) has excellent shape stability without easily deforming even under high temperature conditions. As a result, the exterior material for a vehicle prepared by using the base material for molding (10) provided with the cover layer (3) is preferable to have excellent heat resistance such that delamination hardly occurs easily.

When more flame retardancy is required for the exterior material for a vehicle prepared using the base material for molding (10), it is preferable that the constituent fibers contain a flame-retardant organic resin. As such a flame retardant resin, for example, modaacrylic resin, vinylidene resin, polyvinyl chloride resin, polyvinylidene fluoride resin, novoloid resin, polychlal resin, polyester resin obtained by copolymerizing a phosphorus compound, halogen-containing monomer copolymerized acrylic resin, aramid resin, such as a resin kneaded with a flame retardant halogen-based or phosphorus-based or metal compound-based. Further, the base material for molding (10) may be provided with regenerated fibers such as rayon fibers, Bemberg (registered trademark) fibers, polynodic fibers, cupra fibers and lyocell (registered trademark) fibers, and is particularly preferably provided with rayon fibers (more preferably, the fiber substrate layer (1) containing rayon fibers), it is preferable to prepare a base material for molding (10) which is rich in flame retardancy. Further, it may be a base material for molding (10) on which a flame retardant is supported by using a binder, or the like.

These fibers can be obtained by known methods for example, melt spinning, dry spinning, wet spinning, direct spinning (melt blowing, span bonding, electrostatic spinning, etc.), extraction of fibers with thin fiber diameters by removing one or more resin components from composite fibers, and decomposition of fibers to obtain split fibers.

The other fibers composed of a plurality of types of resins may be generally referred to as composite fibers, for example, in the form of a core-sheath type, an island-sea type, a side-by-side type, an orange type, a bimetallic type, can be adopted.

In addition, a deformed cross section fiber may be included in addition to a substantially circular fiber or an oval fiber. Incidentally, the deformed cross section fiber may be a fiber having a fiber cross section such as, hollow shape, polygonal shape such as a triangular shape, alphabet character-type shape such as a Y-shape, irregular shape, multileaf shape, symbol-type shape such as an asterisk shape, or a shape to which a plurality of these shapes are combined.

When the fiber substrate layer (1) and/or the cover layer (3) contains heat-fusible fibers, it is preferable to impart strength and morphological stability to the base material for molding (10) by thermally fusing the fibers together.

Such a heat-fusible fiber may be an all-fusion type, or may be a partially fusible type of said embodiment such as the composite fiber described above. As such a partially fusible type heat-fusible fiber, a core-sheath type heat-fusible fiber can be employed. As a combination of a core-portion/a sheath-portion in said heat fusible fiber, for example, polyethylene terephthalate/polypropylene, polyethylene terephthalate/low melting point polyethylene terephthalate, polypropylene/polyethylene, polypropylene/low melting point polypropylene, or the like can be employed.

When the fiber substrate layer (1) and the cover layer (3) contain crimpable fibers, stretchability is increased and followability to a mold is excellent and preferable. As such a crimpable fiber, for example, a crimped fiber that expressed the crimp of a latent crimpable fiber or a fiber having a crimp can be used. Further, it may contain a latent crimpable fiber in which crimp is expressed by heating.

The fineness of the fibers constituting the fiber substrate layer (1) and/or the cover layer (3) is not particularly limited, but the fineness may be 1 to 100 dtex, 1.5 to 50 dtex, 2 to 30 dtex, and 3 to 10 dtex so as to provide a base material for molding (10) capable of preparing an exterior material for a vehicle which has high rigidity, such as excellent maximum point load with bending, and excellent texture.

In addition, the fiber length is not particularly limited, but the fiber length may be 20 to 150 mm, 25 to 100 mm, 30 to 90 mm, and 40 to 80 mm so as to provide a base material for molding (10) capable of preparing an exterior material for a vehicle which has high rigidity, such as excellent maximum point load with bending, and excellent texture. It is to be noted that it may be a fiber having a continuous length which is longer than 150 mm and where it is difficult to specify the fiber length (a concept including a constituent fiber of a melt blown nonwoven-fabric, a constituent fiber of a spunbond nonwoven-fabric, or the like).

In particular, it is preferable that the fibers constituting the fiber substrate layer (1) are short fibers and the fibers constituting the cover layer (3) are continuous length fibers, so as to provide a base material for molding (10) capable of preparing an exterior material for a vehicle which has high rigidity, such as excellent maximum point load with bending, and excellent texture.

In the case of the fiber substrate layer (1) and the cover layer (3) such as a nonwoven-fabric or a fibrous-web, can be prepared, for example, by a dry method in which fibers are entangled by subjecting fibers to a card device or an air lay device, by a wet method in which fibers are dispersed in a solvent and the papermaking fibers are entangled in a sheet form, by a direct spinning method (a melt blowing method, a spunbond method, an electrostatic spinning method, a method in which a spinning raw liquid and a gas flow are discharged in parallel and spun (for example, a method disclosed in JP 2009-287138) and the like) is used to spin fibers and collect them, and the like.

The constituent fibers of the prepared a fibrous-web can be entangled and/or integrated to prepare a nonwoven-fabric. As a method of entangling and/or integrating the constituent fibers together, for example, a method of entangling by a needle or a water flow, a method of bonding and integrating the constituent fibers together by a binder or an adhesive fiber by subjecting the fibrous-web to a heat treatment, or the like can be mentioned.

The method of the heat treatment can be selected as appropriate; for example, a method of heating or pressurizing with heat by a roll, a method of heating by oven dryer, a far-infrared heater, a dry heat dryer, or a hot air dryer, or a method of heating by irradiating infrared rays under no pressure, or the like can be used.

Although the binder usable in the present invention is chosen as appropriate, for example, polyolefin based resin (modified polyolefin etc.), ethylene-acrylate copolymers such as ethylene-ethylacrylate copolymer, various rubbers and their derivatives (styrenebutadiene rubber (SBR), fluorine rubber, ethylene-propylene-diene rubber (EPDM), etc.), cellulose derivatives (carboxymethyl cellulose (CMC), hydroxyethyl cellulose, hydroxypropyl cellulose, etc.), polyvinyl alcohol (PVA), polyvinyl butyral (PVB),Polyvinylpyrrolidone (PVP), polyurethane, epoxy resin, polyvinylidene fluoride (PVdF), vinylidene fluoride-hexafluoropropylene copolymer (PVdF-HFP), acrylic-based resin, or the like can be used. It is preferable to include an acrylic-based resin because it is softened to an appropriate at the time of thermoforming such as a heat press using a mold, so that the base material for molding (10) which follows the mold and is excellent in moldability can be provided.

When the cover layer (3) contains a binder, the basis weight of the binder contained can be appropriately selected. Specifically, the basis weight of the binder may be 2 g/m² or more. Further, the basis weight of the binder can be 50 g/m² or less, can be 30 g/m² or less, and can be 20 g/m² or less.

When the fiber substrate layer (1) contains a binder, the basis weight of the contained binder can be appropriately selected. Specifically, the basis weight of the binder may be 200 g/m² or more. Further, the binder may have a basis weight of 500 g/m² or less.

In addition to the resin described above, the binder may contain additives such as, for example, a flame retardant, a perfume, a pigment, an antibacterial agent, an antifungal material, a photocatalyst particle, an emulsifier, a dispersant, a surfactant, particles to be heated and foamed, inorganic particles, and an antioxidant.

When the fabric is woven-fabrics or knitted-fabrics, they can be prepared by weaving or knitting the fibers prepared as described above.

In addition to the fibrous-web, the fabrics such as nonwoven-fabrics, woven-fabrics and knitted-fabrics, or the like, may be subjected to a method of entangling and/or integrating the above-described constituent fibers with each other.

When the cover layer (3) is an air permeable film, a foamed sheet, or the like, a well-known type of the material can be employed.

The various configurations of the fiber substrate layer (1) and the cover layer (3), for example, the thickness, the basis weight, or the like, are appropriately adjusted so as to achieve the object of the present invention.

The thickness of the fiber substrate layer (1) may be between 2 and 15 mm, between 3 and 12 mm, and between 3 and 8 mm. The thickness of the cover layer (3) may be 0.2-3 mm, 0.3-2.5 mm, and 0.4-2 mm. In the present embodiment, the thickness refers to the length in the vertical direction when a compressive load of 20 g/cm² is applied in the vertical direction to the main surface.

The basis weight of the fiber substrate layer (1) may be, for example, 200 to 2000 g/m², 500 to 1700 g/m², and 800 to 1400 g/m². The basis weight of the cover layer (3) can be, for example, 30 to 200 g/m², 40 to 160 g/m², and 60 to 120 g/m². In the present invention, the weight refers to the mass per 1 m² on the surface having the largest area of the measurement object (main surface).

In the base material for molding (10) of the present invention, the polypropylene-based resin layer (5) is present at the interface between the fiber substrate layer (1) and the cover layer (3), and serves to adhesively integrate each main surface of the fiber substrate layer (1) and the cover layer (3).

The polypropylene-based resin layer (5) may be made of a well-known polypropylene-based resin (polypropylene, polymethylpentene, polypropylene having a structure in which a part of a hydrocarbon is replaced with a cyano group or a halogen such as fluorine or chlorine), or a resin made by mixing a plurality of well-known polypropylene-based resins. The polypropylene-based resin is a thermoplastic resin which flows during heating and easily penetrates into the internal voids of the fiber substrate layer (1) and/or the cover layer (3), so that both layers can be strongly bonded to improve rigidity such as excellent peel strength and excellent maximum point load with bending. Further, since the melting point of the polypropylene-based resin is higher than 80°C, it is possible to provide a molded product which satisfies the heat resistance required in the field of an automotive material (for example, no layer delamination caused by melting of a component adhering both layers in an atmosphere of 80°C.) The melting point of the polypropylene-based resin can be appropriately selected depending on the required application, but is preferably higher than 80°C, preferably 90°C or more, and preferably higher than 100°C.

Although the melt mass flow rate (MFR) of the polypropylene-based resin can be appropriately adjusted, it is preferable to employ a polypropylene-based resin having a value measured according to JISK6921-2 of 20 [g/10 min] or more (230 [°C], 2.16 [Kg] : hereinafter, a combination of measurement conditions is omitted) and rich in fluidity, so that the polypropylene-based resin can be elongated and present in the inner voids of the fiber substrate layer (1) and/or the cover layer (3).

On the other hand, when the MFR of the polypropylene-based resin is too high, there is a fear that the base material for molding (10) has overly air permeable, and the sound absorbing performance of the prepared exterior material for a vehicle is deteriorated conversely. Therefore, it is preferable that the MFR of the polypropylene-based resin is 40 [g/10 min] or less.

Note that the polypropylene-based resin may contain, for example, an additive such as a flame retardant, an antioxidant (a phenol-group antioxidant, a phosphorus-group antioxidant, a composite antioxidant of phosphorus and phenol, or the like), a perfume, a pigment, an antibacterial agent, an antifungal material, a photocatalyst particle, an emulsifier, a dispersant, a surfactant, and a thickener.

By being a polypropylene-based resin layer (5) containing a polypropylene-based resin blended with an antioxidant material, more preferably, by being a polypropylene-based resin layer (5) containing only a polypropylene-based resin blended with an antioxidant material, it is preferable to provide a base material for molding (10) which is more excellent in heat resistance. The percentage of the solid mass of the additive in the mass of the polypropylene-based resin can be appropriately adjusted. As an example, the percentage of the solid mass of the antioxidant in the mass of the polypropylene-based resin may be from 0.1% to 5%, may be from 0.5% to 4%, and may be from 1% to 3%

The "interface" referred to in the present invention is a concept including a gap which is between the main surfaces of the fiber substrate layer (1) and the cover layer (3) facing each other in close proximity, and a polypropylene-based resin layer (5) is formed by the presence of a polypropylene-based resin in a film form in the gap along each of the main surfaces. The polypropylene-based resin which is extending and existing in the inner voids of the fiber substrate layer (1) and/or the cover layer (3) from the gap described above, also constitutes a polypropylene-based resin layer (5). Since the polypropylene-based resin layer (5) comprises the polypropylene-based resin which extends and exists in the inner voids of the fiber substrate layer (1) and the cover layer (3), it is preferable to provide a base material for molding (10) in which both layers are firmly bonded and delamination is harder to occur.

The distribution mode and the mass of the polypropylene-based resin layer (5) can be appropriately adjusted so as to provide a base material for molding (10) in which delamination is hardly to occur.

Although the polypropylene-based resin layer (5) may be a layer having air permeability (e.g., a porous film-like layer) or a layer having no air permeability, it is preferable that the polypropylene-based resin layer (5) is a layer having air permeability so as to provide a base material for molding (10) which is excellent in moldability such as being flexible and being rich in followability to a mold. At this time, the percentage of the area of the portion, where the polypropylene-based resin layer (5) is present, in the area of the main surface facing the fiber substrate layer (1) and the cover layer (3) is appropriately adjusted, but is preferably more than 60%, preferably 65% or more, preferably 70% or more, preferably 75% or more, preferably 80% or more, preferably 85% or more, preferably 90% or more, and preferably 95% or more. Further, although the upper limit value is appropriately adjusted, it is preferably less than 100% so as to be a polypropylene-based resin layer (5) having air permeability.

In addition, it is preferable that the polypropylene-based resin layer (5) is uniformly distributed with a width in a specific range and present in the main surface of the fiber substrate layer (1) or the cover layer (3), such as being distributed and presented between a width of 50 to 80 (µm). The polypropylene-based resin layer (5) of such a mode is preferable because both the fiber substrate layer (1) and the cover layer (3) are effectively adhesively integrated, and the base material for molding (10) having improved rigidity efficiently such as excellent peel strength and excellent maximum point load with bending.

When the base material for molding (10) of such an embodiment is heated and molded to prepare an exterior material for a vehicle, a polypropylene resin constituting the polypropylene-based resin layer (5) flows and easily penetrates into each internal void from an interface between the fiber substrate layer (1) and the cover layer (3). As a result, it is possible to provide an exterior material for a vehicle which is excellent in shape stability even under high temperature conditions, and which is excellent in heat resistance with high rigidity such as excellent in peel strength between the fiber substrate layer (1) and the polypropylene resin layer (5) and excellent maximum point load with bending.

Note that the distribution mode of the polypropylene-based resin layer (5) can be judged by observing a main surface on which the polypropylene-based resin layer (5) is exposed by peeling the fiber substrate layer (1) or the cover layer (3) from the base material for molding (10), or by observing a cross section of the base material for molding (10) (also by confirming a photomicrograph obtained by capturing the main surface and/or the cross section thereof). In order to facilitate observation, staining using kayastain staining, or the like may be performed.

The mass of the polypropylene-based resin constituting the polypropylene-based resin layer (5) is appropriately adjusted so as to achieve the problem of the present invention, but can be 9 to 180 g/m², can be 18 to 135 g/m², and can be 27 to 90 g/m²

In FIG. 1, the base material for molding (10) having the cover layer (3) on only one main surface of the fiber substrate layer (1) is exemplified, but it is preferable to provide an exterior material for a vehicle which has excellent shape stability due to its rich rigidity, such as excellent maximum point load with bending, and therefore, as shown in FIG. 2, the base material for molding (20) having the cover layer (3) on both main surfaces of the fiber substrate layer (1) may be used. Note that the polypropylene-based resin layer (5) is present at the interface between the fiber substrate layer (1) and the cover layer (3), on both main surfaces of the fiber substrate layer (1), and adhesively integrates the main surfaces together.

Although, the mode of each cover layer (3) and each polypropylene-based resin layer (5) which exist on both main surfaces of the fiber substrate layer (1) in the base material for molding (20) having the constitution above, can be adjusted as appropriate, it is preferable that the cover layer (3) and the polypropylene-based resin layer (5) provided on one main surface of the fiber substrate layer (1), and the cover layer (3) and the polypropylene-based resin layer (5) provided on the other main surface of the fiber substrate layer (1) have the same composition (e.g., type of resin, etc.) and the same configuration (e.g., basis weight, thickness, etc.). When a base material for molding (20) has such a configuration, the physical properties of one main surface side and the other main surface side of the base material for molding (20) are equal, so that it is possible to provide an exterior material for a vehicle having almost no delamination and excellent in shape stability such as excellent maximum point load with bending.

Next, a method of manufacturing the base material for molding (10, 20) of the present invention will be described. Description of the points having the same configuration as the above-described items is omitted. Although the manufacturing method of the base material for molding (10, 20) according to the present invention can be appropriately selected, a manufacturing method can be exemplified, said method comprising the steps of:
(1) preparing a fabric having core-sheath type conjugate fibers in which the core-portion is made of a polyester-based resin and the sheath-portion is made of a polypropylene-based resin, and capable of constituting a fiber substrate layer (1),
(2) preparing a cover layer material capable of constituting a cover layer (3),
(3) providing a layer of polypropylene-based resin on one main surface of the fabric and/or the cover layer material,
(4) preparing a laminate formed by laminating the fabric and the cover layer material with the layer of polypropylene-based resin between them,
(5) adhesively integrating the fabric and the cover layer material by the layer of polypropylene-based resin by fusing the polypropylene-based resin contained in the layer of polypropylene-based resin by heating the laminate.

### Step (1) will be described.

As a fabric having core-sheath type conjugate fibers characterized of the core-portion which comprises a polyester-based resin and the sheath-portion which comprises a polypropylene-based resin, for example, a fabric such as a nonwoven-fabric, a fibrous-web, a woven-fabric, or a knitted-fabric is prepared.

It is preferable to employ a nonwoven-fabric or a fibrous-web as the fabric because it is easy to provide a base material for molding (10, 20) which is excellent in moldability such as being flexible and being rich in followability to a mold. Further, it is preferable to employ a nonwoven-fabric or a fibrous-web which is constructed using short cut fibers as a fabric, so as to provide a base material for molding (10, 20) capable of preparing an exterior material for a vehicle high rigidity such as excellent maximum point load with bending.

### The process (2) will be described.

As the cover layer material, for example, a fabric such as nonwoven-fabrics, fibrous-web, woven-fabrics and knitted-fabrics, an air permeable film, a foamed sheet, or the like is prepared.

It is preferable to employ a nonwoven-fabric or a fibrous-web as a cover layer material because it is easy to provide a base material for molding (10, 20) which is excellent in moldability such as being flexible and being rich in followability to a mold. In particular, it is preferable to employ a long fiber nonwoven-fabric or a long fiber fibrous-web as a fabric so as to provide a base material for molding (10, 20) excellent in tear resistance, scratch resistance, shape stability, or the like.

### Step (3) will be described.

The type of polypropylene-based resin may be employed as described above.

Note that the MFR of the polypropylene-based resin is preferably 20 [g/10 min] or more. Furthermore, polypropylene-based resins containing additives can be employed. In particular, by employing a polypropylene-based resin blended with an antioxidant, it is preferable to provide a base material for molding (10, 20) having excellent heat resistance.

A method of providing a layer of a polypropylene-based resin can be appropriately selected, for example, a method of laminating a film which is made of a polypropylene-based resin onto one main surface of a fabric and/or a cover layer material, a method of extruding a polypropylene-based resin which is melted onto one main surface of a fabric and/or a cover layer material using a T-die, or the like, then directly laminating the polypropylene-based resin. Whether the film has a thickness, basis weight and openings, and the mass of the polypropylene-based resin to be directly laminated can be appropriately adjusted.

It is to be noted that, by providing a polypropylene-based resin layer (5) which also extends into the inner voids of the fiber substrate layer (1) and/or the cover layer (3), and by providing a polypropylene-based resin layer (5) which is uniformly distributed with a width in a specific range and present, then it is possible to provide an exterior material for a vehicle having rigidity such as excellent peel strength and excellent maximum point load with bending, therefore unstretched-polypropylene-based resin (more preferably, unstretched polypropylene resin) that has been melted and heated and fluidized is supplied in a film form and directly laminated on one main surface of the fabric or the cover layer material.

### Step (4) will be described.

By this step, a laminate comprising a laminate structure of "a fabric"-"a layer of polypropylene-based resin"-"a cover layer" is prepared.

It is to be noted that, in combination with the above-described step (3) and this step, the fabric and the cover layer material may be laminated and integrated with adhesively integrating by interposing a layer of the molten polypropylene-based resin between them. When this step is employed, the step of providing the laminate to the heating device in the step (5) is omitted, and the base material for molding (10, 20) can be manufactured.

### Step (5) will be described.

The method of heating the laminate can be appropriately selected and the polypropylene resin can be melted by, for example, subjecting the laminate to a heater such as an oven dryer, a far infrared heater, a dry heat dryer, a hot air dryer, a conveyor type heater, a heat roll, or the like. The heating temperature may be a temperature at which the polypropylene-based resin can be melted, and the upper limit of the heating temperature is appropriately adjusted so that the shape, the function, or the like of the constituent member such as a fabric and/or a cover layer material are not unintentionally lowered. The heating time can also be adjusted as appropriate. Further, by applying a pressure to the thickness direction of the laminate at the same time as heating such as subjecting the laminate to a heat roll, it may be more firmly adhered and integrated.

In the case where the fabric and/or the cover layer material is a fibrous-web, a nonwoven-fabric may be formed by bonding the constituent fibers together by the present heating step (bonding by a melted binder or melting and bonding the thermoplastic resin component contained in the constituent fibers). At this time, by heating at a temperature higher than the melting point of the sheath-portion (polypropylene-based resin) and at a temperature lower than the melting point of the core-portion (polyester-based resin) of the core-sheath type conjugate fiber according to the present invention, the sheath-portion is melted and the constituent fibers can be bonded together by fibers.

A method of cooling the laminate after being subjected to the heat treatment can be appropriately selected, and as an example, a method of allowing the laminate to cool down in a room temperature atmosphere can be employed.

Further, a manufacturing method can be exemplified, said method, between the above-mentioned steps (4) and (5), comprising the steps of:
(4') providing a layer of polypropylene-based resin on the other main surface of the fabric, or alternatively, providing a layer of polypropylene-based resin on one main surface of a separately prepared cover layer material, and
(4") preparing a laminate formed by laminating the cover layer materials on both main surfaces of the fabric with the layers of polypropylene-based resin between them. By such a manufacturing method, a base material for molding (20) having cover layers (3) on both main surfaces of the fiber substrate layer (1) as shown in FIG. 2 can be manufactured.

As described above, the base material for molding (10, 20) having the configuration according to the present invention can be manufactured, but may be a base material for molding (10, 20) formed by laminating another constituent member(s) such as a further porous body, a film, or a foam on a main surface(s). In addition, it may be subjected to various secondary processes such as a process of punching out the shape according to the application and usage mode or a process of adjusting various physical properties such as thickness of a reliant press process, or the like.

By subjecting the base material for moldings (10, 20) according to the present invention to a well-known heating molding machine, an exterior material for a vehicle such as UBS can be prepared.

### EXAMPLES

Hereinafter, the present invention will be specifically described with reference to Examples, but these do not limit the scope of the present invention.

### (Examples 1-2 and Comparative Examples 1-3)

First, a spunbonded nonwoven-fabric (basis weight: 90 g/m², fineness: 9 dtex) made of polyethylene terephthalate (melting point: 255°C) was prepared. In addition, a T-die was used to extrude and directly laminated unstretched-polypropylene on one main surface of the spunbond nonwoven-fabric. Thereby, a layer of a film-like unstretched-polypropylene resin (basis weight: 54 g/m², thickness: 60 µm, melting point: 160°C, MFR: 30 g/10 min) was provided on one main surface of the spunbond nonwoven-fabric.

Then, various fibrous-webs (basis weight: 900 g/m²) were prepared by mixing fibers with a combination of fibers described in Table 1, subjecting them to a carding machine and then subjecting them to needle punch entanglement. Then, the prepared fibrous-web was subjected to fiber bonding by heating it in a heating furnace at 200°C then cooled down, and various needle-punched nonwoven-fabrics were prepared.

Further, a laminate was prepared by laminating the spunbond nonwoven-fabric on both main surfaces of each needle-punched nonwoven-fabric with a layer of a unstretched polypropylene resin between them. Thereafter, the polypropylene resin constituting the unstretched-polypropylene resin layer was melted by subjecting to a hot roll machine with clearance adjusted to 6.5 mm (heating temperature: 200°C), and then allowed to cool down.

In this way, a base material for molding (basis weight: 1188 g/m², thickness: 7.0 mm) in which a fiber substrate layer derived from the needle-punched nonwoven-fabric and a cover layer derived from the spunbond nonwoven-fabric were adhesively integrated by the polypropylene-based resin layer present at the interface of both layers, was prepared respectively. Note that the polypropylene-based resin constituting the polypropylene-based resin layer also extended into the inner voids of the fiber substrate layer and the cover layer, and was present. Further, the polypropylene-based resin layer was uniformly distributed with a width in a specific range and was present, and had air permeability.

A schematic cross-sectional view of the base material for molding thus prepared is illustrated in FIG. 2.

**[Table 1]**

| | PET single fiber (% by mass) | PP single fiber (% by mass) | PET/L-PET core-sheath type conjugate fiber (% by mass) | PET/PP core-sheath type conjugate fiber (% by mass) |
|---|---|---|---|---|
| Comparative Example 1 | 50 | 50 | 0 | 0 |
| Comparative Example 2 | 50 | 0 | 50 | 0 |
| Example 1 | 50 | 0 | 0 | 50 |
| Comparative Example 3 | 50 | 30 | 20 | 0 |
| Example 2 | 50 | 0 | 20 | 30 |

Note that, as described in Table 1, the details of each mixed fiber are as follows.
PET single fiber: polyethylene terephthalate fiber (fineness: 6 d, fiber length: 51 mm, melting point: 255°C)
PP single fiber: polypropylene fiber (fineness: 4 d, fiber length: 51 mm, melting point: 160°C)
PET/L-PET core-sheath type conjugate fiber: core-sheath type conjugate fiber (fineness: 4 d, fiber length: 51 mm) consisting of a core-portion of polyethylene terephthalate (melting point: 255°C) and a sheath-portion of low melting point polyethylene terephthalate (melting point: 180°C)
PET/PP core-sheath type conjugate fibers: core-sheath type conjugate fiber (fineness: 4 d, fiber length: 51 mm) consisting of a core-portion of polyethylene terephthalate (melting point: 255°C) and a sheath-portion of polypropylene (melting point: 160°C)

The base materials for molding of Examples and Comparative Examples prepared as described above were subjected to a far-red oven (heating temperature: 210°C) and heated, and then heat-molded by using a flat plate press (clearance: 5 mm, pressure: 30 kg/ cm²) capable of cooling to 30°C, to produce flat plate shaped products.

The peel strength and the maximum point load with bending in a 20°C atmosphere and in an 80°C atmosphere were measured for the flat plate shaped products produced using the base materials for molding of Examples and Comparative Examples, and the measurement results are summarized in Table 2. The methods of measuring the peel strength and the maximum point load with bending are as follows.

### (Method of Measurement of Peel Strength)

A test piece (shape: rectangular, short side: 50 mm, long side: 150 mm) was taken from the molded product. Then, the collected test piece was left standing for 1 hour in a 20°C atmosphere.

Then, on one main surface of the test piece, from one short side toward the other short side direction, the cover layer derived from the spunbond nonwoven-fabric was peeled off by 80 mm (containing polypropylene derived from the polypropylene-based resin layer). Thereafter, a portion of the cover layer peeled off was fixed to one chuck of a tensile strength tester (Orientec, Tensilon UCT-500, distance between chucks: 70 mm, tensile speed: 200 mm/min), and the remaining portion of the test piece where the cover layer portion was peeled off was fixed to the other chuck.

By increasing the distance between the chucks, the cover layer was further peeled toward the other short side direction of the test piece by 60 mm, and the maximum stress measured during that period was measured.

Measurements were performed in the same manner three times for one type of molded product, and the mean of the obtained measured values was calculated to determine the peel strength (units: N/25 mm) of the molded product in an atmosphere of 20°C.

The collected test piece was heated at rest for 1 hour in an atmosphere of 80°C. In the same manner as in the measurement described above except that the test piece immediately after heating was used, the peel strength (units: N/25 mm) of the molded product in an 80°C atmosphere was determined.

Note that, a molded product having a high value of the peel strength means a molded product in which delamination hardly occurs.

In addition, the maintenance rate of peel strength (units: %) was obtained by calculating the percentage of the peel strength (units: N/25 mm) of the molded product in an atmosphere of 80°C to the peel strength (units: N/25 mm) of the molded product in an atmosphere of 20°C.

Note that, a molded product having a high value means a molded product having excellent heat resistance that prevents deterioration of peel strength even in a high temperature atmosphere.

### (Measuring method of the maximum point load with bending)

A test piece (shape: rectangular, short side: 50 mm, long side: 150 mm) was taken from the molded product. Then, the collected test piece was left standing for 1 hour in a 20°C atmosphere.

The test piece was evenly placed on the two supports (radius of a tip: 3.20 mm) which were placed at a distance of 100 mm, so that it would straddle. Then, a pressure wedge with a tip radius of 3.20 mm was used to pressurize the central portion (the portion of 50 mm from the support stand) of the test piece which is between the support stands in the direction of gravity at a pressure rate of 20 mm/min. At this time, the load of pressurization was measured over time by a tensile tester (Tensilon UCT-500, Orientec) with the pressure wedge, and the load at the point where the load was maximum was recorded as the maximum point load with bending.

Measurements were performed in the same manner three times for one type of molded product, and the mean of the obtained measured values was calculated to determine the maximum point load with bending (units: N) of the molded product in an atmosphere of 20°C.

The collected test pieces were heated at rest for 1 hour in an atmosphere of 80°C. In the same manner as in the measurement described above except that the test piece immediately after heating was used, the maximum point load with bending (units: N) of the molded product in an 80°C atmosphere was determined.

Note that, a molded product having a high value of the maximum point load with bending means a molded product having excellent shape stability due to its rich rigidity.

**[Table 2]**

| | peel strength (N/25 mm) | | the maintenance rate of peel strength (%) | maximum point load with bending (N) | |
|---|---|---|---|---|---|
| | in 20°C atmosphere | in 80°C atmosphere | | in 20°C atmosphere | in 80°C atmosphere |
| Comparative Example 1 | 25 | 14 | 56 | 13 | 10 |
| Comparative Example 2 | 19 | 10 | 53 | 23 | 7 |
| Example 1 | 47 | 38 | 81 | 20 | 16 |
| Comparative Example 3 | 22 | 12 | 55 | 18 | 12 |
| Example 2 | 38 | 27 | 71 | 21 | 15 |

From the results of comparing Comparative Examples 1 to 2 with Example 1, and from the results of comparing Comparative Example 3 with Example 2, by a base material for molding comprising a configuration according to the present invention, it was found:
- that it is possible to provide a molded product with excellent peel strength and resistance to delamination, even under high temperature conditions of an 80°C atmosphere, in addition to in a 20°C atmosphere;
- that it is possible to provide a molded product that has a high maintenance rate of peel strength and preventing a decrease in peel strength under a high temperature atmosphere; and
- that even under high temperature conditions of an 80°C atmosphere, it is possible to provide a molded product with excellent shape stability due to its high rigidity, such as excellent maximum point load with bending. Therefore, according to the base material for molding of the present invention, an exterior material for a vehicle having excellent heat resistance can be provided.

### INDUSTRIAL APPLICABILITY

With the base material for molding of the present invention, an exterior material for a vehicle can be prepared. According to the base material for molding of the present invention, interior materials for vehicles, such as an engine cover, a ceiling material, a door material, a trim material or the like, can also be prepared.

### REFERENCE SIGNS LIST

10, 20: Abase material for molding
1: A fiber substrate layer
3: A cover layer
5: A polypropylene-based resin layer

## Claims

1. A base material for molding, comprising a fiber substrate layer and a cover layer,
wherein the fiber substrate layer and the cover layer are adhesively integrated by a polypropylene-based resin layer which exists at an interface between the fiber substrate layer and the cover layer, and
wherein the fiber substrate layer comprises core-sheath type conjugate fibers in which a core-portion is made of a polyester-based resin and a sheath-portion is made of a polypropylene-based resin.
